# FASCICULE DE BREVET EUROPEEN

(11) **EP 3 302 746 B1**
(45) Date de publication et mention de la délivrance du brevet: **24.04.2019**
(21) Numéro de dépôt: 16727472.9
(22) Date de dépôt: 02.06.2016
(51) Int. Cl.: B01D 11/04, B01F 3/10

(54) **INSTALLATION DE MÉLANGE-SÉPARATION DE LIQUIDES NON MISCIBLES**
EINRICHTUNG ZUM MISCHEN/TRENNEN VON NICHT MISCHBAREN FLÜSSIGKEITEN
FACILITY FOR MIXING/SEPARATING IMMISCIBLE LIQUIDS

(30) Priorité: 04.06.2015 FR 1555085
(43) Date de publication de la demande: 11.04.2018
(73) Titulaire: Technip France, 92400 Courbevoie (FR)
(72) Inventeur: FENOL, Guillaume, 69300 Caluire-et-Cuire (FR); HENNEQUIN, Olivier, 69340 Francheville (FR)
(74) Mandataire: Lavoix
(86) Numéro de dépôt international: PCT/EP2016/062544
(87) Numéro de publication internationale: WO 2016/193391

(56) Documents cités:
- FR-A1- 2 352 573
- FR-A1- 2 590 497
- GB-A- 793 025

## Description

La présente invention se rapporte à une installation de mélange-séparation de deux liquides non miscibles présentant des densités différentes.

Plus précisément, l'invention se rapporte à une installation du type comprenant un mélangeur associé à un décanteur, ledit mélangeur comportant : une cuve pourvue de deux entrées de liquide ; un agitateur situé dans la cuve, l'agitateur étant monté sur un arbre rotatif autour d'un axe vertical ; et une pompe élévatrice située au-dessus de l'agitateur.

Cette installation est notamment destinée au mélange d'une phase aqueuse et d'une phase organique, puis à leur décantation, par exemple dans le cadre du traitement de minerais contenant des terres rares à séparer.

Une telle installation est notamment connue du document FR2352573. Elle comporte une pompe élévatrice, destinée à transférer le mélange phase aqueuse/phase organique vers un décanteur. La pompe élévatrice comporte typiquement un stator tronconique fixe dans lequel tourne un rotor, composé de pales montées sur un arbre. La rotation du rotor génère une montée du liquide contre la paroi interne du stator tronconique. Le mélange de liquides déborde vers un niveau supérieur de l'installation et s'écoule vers le décanteur.

Une installation similaire est connue du document GB793025, qui décrit notamment une pompe comportant un corps mobile rotatif selon l'axe vertical, ledit corps mobile définissant une première surface interne tronconique disposée selon l'axe vertical et évasée vers le haut.

Dans certains cas, ce type de pompe ne donne pas entière satisfaction. Une étude récente a notamment mis en évidence un cisaillement important entre le rotor et le stator. Ce phénomène génère de fines gouttelettes qui rallongent le temps de décantation et augmentent la quantité de phase organique retenue dans la phase aqueuse.

L'objet de la présente invention est de fournir une installation qui permette une séparation plus rapide d'un mélange liquide/liquide, tout en obtenant des performances de séparation égales ou supérieures à celles des dispositifs existants.

A cet effet, l'invention a pour objet une installation du type précité, dans laquelle la pompe comporte en outre un corps fixe par rapport à la cuve, ledit corps fixe définissant une deuxième surface interne tronconique disposée selon l'axe vertical et évasée vers le haut, ladite deuxième surface interne étant située sensiblement dans un prolongement de la première surface interne, au-dessus de ladite première surface interne.

Suivant des modes particuliers de réalisation, l'installation comporte l'une ou plusieurs des caractéristiques suivantes, prises isolément ou selon toute combinaison techniquement possible :
- le corps mobile est monté sur l'arbre rotatif sur lequel est monté l'agitateur ;
- une hauteur de la deuxième surface interne tronconique est sensiblement comprise entre 1 et 3 fois une hauteur de la première surface interne tronconique, plus préférentiellement comprise entre 1,5 et 2 fois ladite hauteur de la première surface interne tronconique, les hauteurs étant mesurées selon l'axe vertical ;
- la première surface interne tronconique du corps mobile porte des ailettes s'étendant radialement vers l'axe vertical ;
- des surfaces des ailettes sont inclinées par rapport à l'axe vertical, d'un angle préférentiellement compris entre 5° et 40° et plus préférentiellement proche de 15° ;
- chaque ailette a la forme d'une bande enroulée selon une hélice conique ;
- une intersection de chaque ailette avec un plan horizontal passe sensiblement par un rayon d'un cercle formant l'intersection dudit plan avec la première surface interne tronconique ;
- une extrémité supérieure de la deuxième surface interne tronconique de la pompe élévatrice est configurée de sorte à déverser vers le décanteur un liquide montant sur les première et deuxième surfaces internes tronconiques ;
- l'installation comprend plusieurs ensembles installés en série, chaque ensemble étant formé d'un mélangeur associé à un décanteur.

L'invention a également pour objet un procédé de mélange-séparation de deux liquides non miscibles présentant des densités différentes, le procédé comprenant les étapes suivantes : dans une installation telle que décrite ci-dessus, introduction dans la cuve de deux liquides non miscibles ; mise en rotation de l'arbre portant l'agitateur, de sorte à mélanger les deux liquides ; mise en rotation de la première surface interne tronconique de la pompe élévatrice ; montée du mélange de liquides sur les première et deuxième surfaces internes tronconiques ; et écoulement du mélange vers le décanteur.

L'invention sera mieux comprise à la lecture de la description qui va suivre, donnée uniquement à titre d'exemple et faite en se référant aux dessins sur lesquels :
- la figure 1 est une vue schématique en section d'une installation de mélange-séparation selon l'état de la technique ;
- la figure 2 est une vue de détail, en coupe, d'une installation de mélange-séparation selon un premier mode de réalisation de l'invention, comprenant notamment une pompe élévatrice ;
- la figure 3 est une vue en coupe, de la pompe élévatrice de l'installation de mélange-séparation de la figure 2 ;
- la figure 4 est une vue de détail, de dessus, d'une pompe élévatrice d'une installation de mélange-séparation selon un autre mode de réalisation de l'invention ; et
- la figure 5 est une vue schématique de détail, de côté, de la pompe élévatrice de la figure 4.

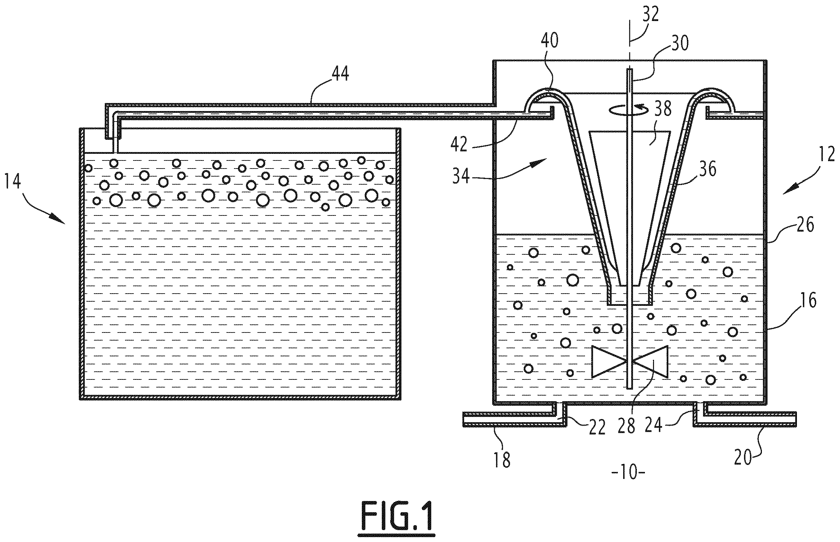

L'installation 10 de la figure 1 est un mélangeur-décanteur tel que décrit dans le document FR2352573. Plusieurs mélangeurs-décanteurs 10 peuvent être juxtaposés en série pour former une batterie d'extraction.

L'installation 10 comporte un mélangeur 12 et un décanteur 14. Le mélangeur 12 comporte une cuve 16 à la base de laquelle débouchent deux entrées 18, 20, de liquide, correspondant respectivement à la phase 22 aqueuse et à la phase 24 organique. La cuve 16 est remplie d'un mélange des liquides 22, 24 jusqu'à un niveau 26.

Le mélangeur 12 comporte en outre un agitateur 28 situé dans la cuve 16. L'agitateur est monté sur un arbre 30 rotatif autour d'un axe 32 vertical.

Le mélangeur 12 comporte en outre une pompe 34 élévatrice, située au-dessus de l'agitateur. La pompe 34 comporte notamment un stator 36 tronconique fixe, disposé selon l'axe 32 vertical et évasé vers le haut. Dans le stator 36 tourne un rotor 38, composé de pales montées sur l'arbre 30.

Lorsque l'arbre 30 est entraîné en rotation par un moteur (non représenté), la rotation du rotor 38 génère une montée du liquide contenu dans la cuve 16 contre la paroi interne du stator 36 tronconique. Le mélange de liquides contenu dans la cuve 16 atteint un déversoir 40 supérieur du stator 36 et déborde vers un niveau 42 supérieur de l'installation. Une rampe 44 d'écoulement conduit alors le mélange vers le décanteur 14.

Le décanteur 14 comporte notamment une cuve, ainsi que des moyens (non représentés) d'écoulement distinct des deux phases 22, 24 après séparation, comme décrit dans le document FR2352573.

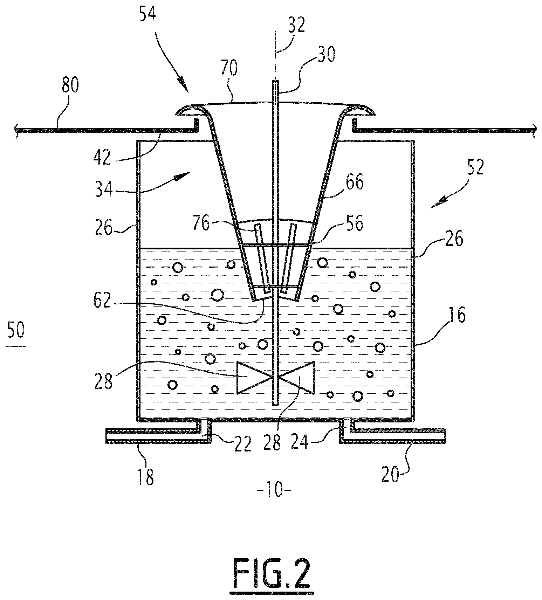

La figure 2 est une vue de détail d'une installation 50 de mélange-séparation selon un mode de réalisation de l'invention. Plus précisément, la figure 2 montre un mélangeur 52 de l'installation 50. Le mélangeur 52 est relié à un décanteur (non représenté) analogue au décanteur 14 de la figure 1.

Le mélangeur 52 comporte plusieurs éléments identiques à ceux du mélangeur 12. Ces éléments seront désignés par les mêmes numéros de référence que précédemment.

Le mélangeur 52 comporte notamment une cuve 16 à la base de laquelle débouchent au moins deux entrées 18, 20 de liquide, correspondant respectivement à la phase 22 aqueuse et à la phase 24 organique. La cuve 16 est remplie d'un mélange des liquides 22, 24 jusqu'à un niveau 26.

Le mélangeur 52 comporte en outre un agitateur 28 situé dans la cuve 16. L'agitateur est monté sur un arbre 30, rotatif autour d'un axe 32 vertical.

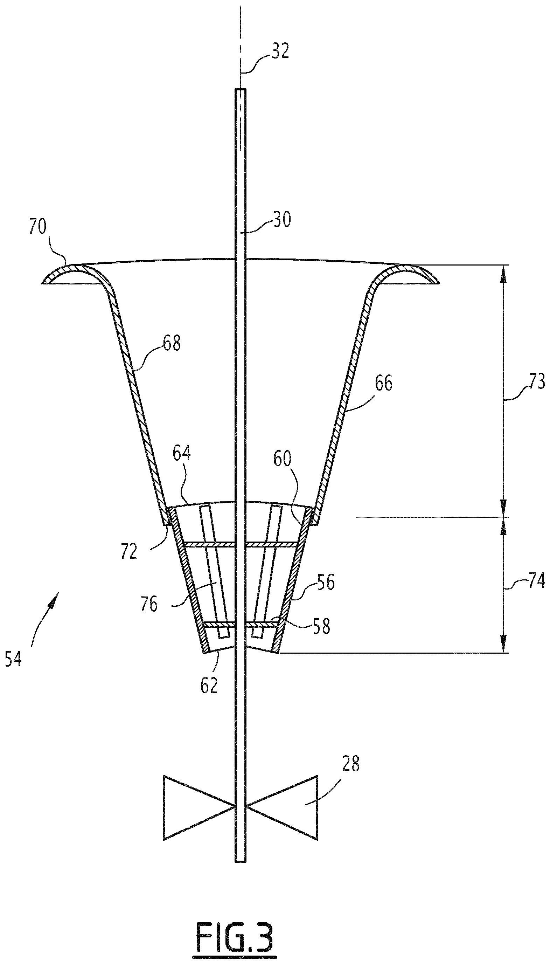

Le mélangeur 52 comporte en outre une pompe élévatrice 54, située au-dessus de l'agitateur. La pompe 54 est représentée en détail à la figure 3.

La pompe élévatrice 54 comporte un corps tronconique mobile 56, solidaire de l'arbre rotatif 30. Plus précisément, le corps tronconique mobile 56 est monté sur l'arbre 30 au moyen de barres 58 transversales s'étendant radialement autour dudit arbre 30.

Le corps 56 a une forme analogue à celle du stator 36 tronconique de la figure 1. Le corps mobile 56 définit une première surface interne tronconique 60, disposée selon l'axe 32 vertical et évasée vers le haut. La première surface interne tronconique 60 s'étend entre une extrémité inférieure 62, proche de l'agitateur 28, et une extrémité supérieure 64.

La pompe 54 comporte en outre un corps tronconique fixe 66. De manière analogue au stator 36 de la figure 1, le corps tronconique fixe 66 est fixe par rapport à la cuve 16. Le corps tronconique fixe 66 définit une deuxième surface interne tronconique 68, disposée selon l'axe 32 vertical et évasée vers le haut.

Une extrémité supérieure 70 de la deuxième surface interne tronconique 68 a une forme de déversoir. Plus précisément, l'extrémité supérieure 70 présente une forme de collerette faisant saillie radialement vers l'extérieur du cône définissant la surface 68.

Le corps tronconique fixe 66 est situé au-dessus du corps tronconique mobile 56, de sorte que les première 60 et deuxième 68 surfaces internes tronconiques soient situées sensiblement dans le prolongement l'une de l'autre. De préférence, l'extrémité supérieure 64 du corps mobile 56 est située à l'intérieur du corps fixe 66, à proximité d'une extrémité inférieure 72 dudit corps fixe. Afin que le corps mobile 56 puisse tourner dans le corps fixe 66, un jeu faible est préférentiellement ménagé entre lesdits corps 56, 66.

De préférence, les angles entre l'axe 32 vertical et une génératrice des cônes définissant respectivement la première 60 et la deuxième 68 surfaces internes tronconiques sont sensiblement égaux. Un tel angle est préférentiellement compris entre 5° et 12°. Plus préférentiellement, l'angle est égal à 9° ± 0,5°. La forme globale des première 60 et deuxième 68 surfaces internes tronconiques, dans le prolongement l'une de l'autre, est donc sensiblement celle d'un unique tronc de cône.

De préférence, une hauteur 73 de la deuxième surface interne tronconique 68 est sensiblement comprise entre 1 et 3 fois une hauteur 74 de la première surface interne tronconique 60, les hauteurs étant mesurées selon l'axe vertical 32. Plus préférentiellement, la hauteur 73 de la deuxième surface 68 est comprise entre 1,5 et 2 fois la hauteur 74 de la première surface 60. Par exemple, la hauteur 74 de la première surface 60 est d'environ 35 cm et la hauteur 73 de la deuxième surface 68 est d'environ 65 cm.

De manière préférentielle, la première surface interne tronconique 60 porte des ailettes 76 s'étendant radialement, en direction de l'axe 32 vertical. Le nombre d'ailettes 76 est par exemple compris entre trois et douze, réparties régulièrement autour de l'axe 32. De préférence, les ailettes 76 s'étendent sensiblement sur toute la hauteur 74 de la première surface interne tronconique 60, entre l'extrémité inférieure 62 et l'extrémité supérieure 64.

Dans le mode de réalisation des figures 2 et 3, les ailettes 76 s'étendent sensiblement le long de génératrices du cône formant la première surface interne tronconique 60. Les ailettes 76 sont donc comprises dans des plans verticaux passant par l'axe 32.

Le corps tronconique mobile 56 et les ailettes 76, solidaires de l'arbre 30, sont mobiles en rotation autour de l'axe 32 par rapport à la cuve 16.

Selon une variante aux modes de réalisation des figures 2 et 3, le corps tronconique mobile 56 et l'agitateur 28 sont reliés à des moyens distincts de mise en rotation selon l'axe vertical 32. Ainsi, il est notamment possible de mouvoir le corps tronconique 56 et l'agitateur 28 à des vitesses différentes.

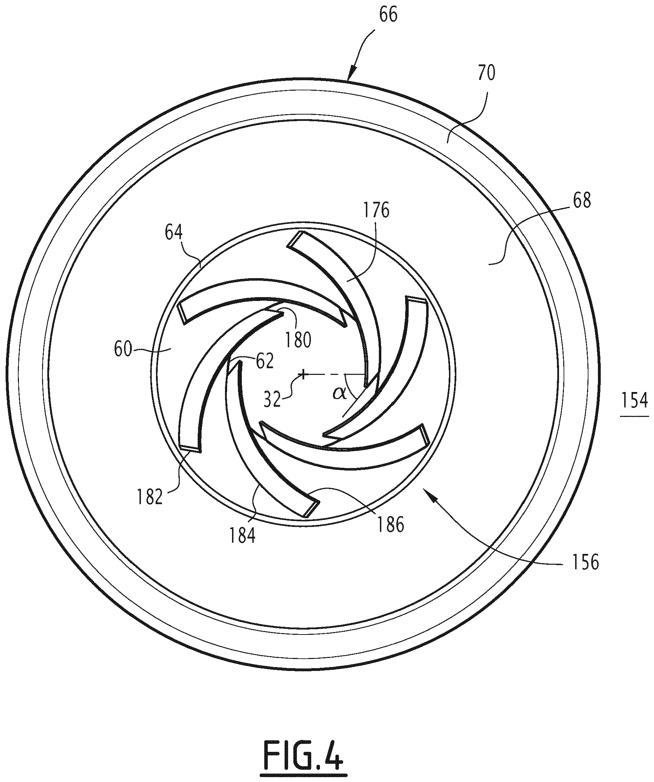

La figure 4 est une vue de dessus, partielle, d'une pompe élévatrice 154 selon un autre mode de réalisation de l'invention. A l'exception des différences détaillées ci-après, la pompe élévatrice 154 est analogue à la pompe élévatrice 54 des figures 2 et 3, décrite ci-dessus.

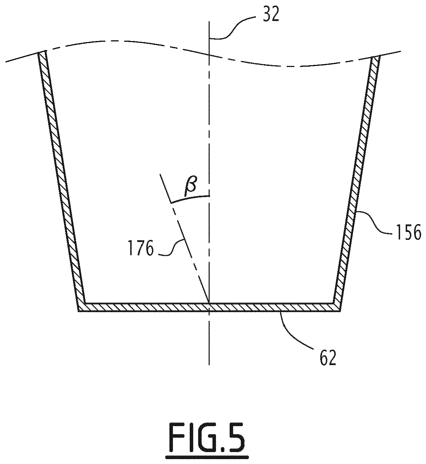

La pompe élévatrice 154 comporte un corps tronconique fixe 66, identique au corps tronconique fixe des figures 2 et 3. La pompe élévatrice 154 comporte en outre un corps tronconique mobile 156, apte à remplacer le corps tronconique mobile 56 de la pompe 54 des figures 2 et 3. Une partie inférieure du corps tronconique mobile 156 est représentée de manière schématique, en vue latérale, sur la figure 5.

Le corps tronconique mobile 156 comporte une surface interne tronconique 60, identique à la surface interne du corps 56 des figures 2 et 3 et disposée selon l'axe 32 vertical, entre les extrémités inférieure 62 et supérieure 64.

Le corps tronconique mobile 156 comporte une pluralité d'ailettes 176, solidaires de la surface 60 et réparties régulièrement autour de l'axe 32. De préférence, le corps 156 comporte entre six et douze ailettes. De préférence, les ailettes 176 sont sensiblement identiques.

Une extrémité inférieure 180 de chacune des ailettes 176 est disposée au niveau de l'extrémité inférieure 62 de la surface 60. De préférence, une extrémité supérieure 182 de chacune des ailettes 176 est disposée au niveau de l'extrémité supérieure 64 de la surface 60.

Contrairement au mode de réalisation des figures 2 et 3, les ailettes 176 sont inclinées par rapport à l'axe 32 et aux génératrices du cône formant la surface 60. En particulier, chaque ailette 176 a la forme d'une bande enroulée selon une hélice conique autour de l'axe 32.

L'extrémité inférieure 180 d'une ailette 176 est une arête rectiligne disposée dans le plan horizontal de l'extrémité 62 et formant un angle α avec un rayon du cercle définissant ladite extrémité 62. L'angle α est compris entre 0° et 60°, préférentiellement entre 0° et 20° et plus préférentiellement entre 0° et 10°.

Encore plus préférentiellement, l'angle α entre une ailette 176 et un rayon du cercle définissant l'extrémité inférieure 62 est proche de, ou égal à, 0°.

Selon un mode de réalisation préféré, dans tout plan horizontal passant par la surface 60, l'ailette 176 forme un angle α sensiblement constant avec un rayon du cercle définissant ladite surface 60. Ledit angle α est avantageusement proche de, ou égal à, 0°. Ainsi, une intersection de chaque ailette 176 avec un plan horizontal passe sensiblement par un rayon du cercle définissant ladite surface 60.

Le long de l'axe 32, l'ailette 176 présente une largeur sensiblement constante entre un bord externe 184, en contact avec la surface 60, et un bord interne 186. A titre d'exemple, la largeur d'une ailette est d'environ 30 mm.

Comme visible sur la figure 5, une surface d'une ailette 176 forme avec l'axe 32 un angle β compris entre 5° et 40°, préférentiellement compris entre 10° et 30° et plus préférentiellement égal à 15°± 0,5°. Dans le mode de réalisation des figures 4 et 5, l'angle β est sensiblement constant sur une hauteur de l'ailette 176.

Selon une variante, l'angle β formé par la surface d'une ailette 176 avec l'axe vertical 32 est variable sur la hauteur de l'ailette. Plus préférentiellement, ledit angle entre la surface de l'ailette et l'axe 32 est décroissant entre l'extrémité inférieure 180 et l'extrémité supérieure 182, l'ailette étant ainsi incurvée vers le haut.

Dans les modes de réalisation des figures 2 à 5, la deuxième surface interne tronconique 68 est dépourvue d'ailettes. Selon une variante (non représentée), la deuxième surface interne tronconique 68 porte également des ailettes s'étendant radialement, en direction de l'axe 32 vertical. Lesdites ailettes de la deuxième surface 68 sont préférentiellement inclinées par rapport à la verticale.

Un fonctionnement de l'installation 50 (figure 2) va maintenant être décrit. L'arbre 30 est entraîné en rotation autour de l'axe 32 par un moteur (non représenté). La rotation de l'agitateur 28 conduit au mélange des deux phases 22, 24 du liquide de la cuve 16. Par ailleurs, la rotation du corps 56, 156, entraîne le liquide de la cuve 16. Le liquide monte alors contre la partie inférieure mobile 56 du cône, puis poursuit sa trajectoire contre la partie supérieure fixe 66, jusqu'au déversoir 70. Le liquide déborde vers un niveau 80 supérieur de l'installation, d'où il est entraîné vers le décanteur 14.

Cette configuration de la pompe 54 permet de diminuer l'énergie cinétique du liquide au niveau du déversoir, ce qui limite le cisaillement. La forme des ailettes du corps mobile 56 permet d'influer sur le cisaillement et sur le rapport entre le débit de liquide au niveau du déversoir 70 et la vitesse de rotation du moteur. En particulier, les ailettes inclinées 176, représentées aux figures 4 et 5, sont préférables aux ailettes verticales 76 des figures 2 et 3.

Dans un mode de réalisation avantageux, plusieurs pompes élévatrices 54, 154 sont installées en série pour former une batterie d'extraction. Il est également possible d'installer en série une ou des pompes élévatrices 54, 154 selon l'invention avec une ou des pompes élévatrices 34 de l'état de la technique.

Dans une telle batterie d'extraction, une phase liquide aqueuse 22, contenant par exemple des terres rares, est mise en contact sous forme d'un flux à contre-courant avec une phase organique 24, contenant par exemple un agent d'extraction. La phase organique est ainsi enrichie progressivement en terres rares.

## Revendications

1. Installation (50) de mélange-séparation de deux liquides (22, 24) non miscibles présentant des densités différentes, ladite installation comprenant un mélangeur (52) associé à un décanteur (14), ledit mélangeur comportant :
- une cuve (16) pourvue de deux entrées (18, 20) de liquide ;
- un agitateur (28) situé dans la cuve, l'agitateur étant monté sur un arbre (30) rotatif autour d'un axe (32) vertical ; et
- une pompe élévatrice (54, 154) située au-dessus de l'agitateur ;
**caractérisée en ce que** la pompe comporte :
- un corps mobile (56, 156) rotatif selon l'axe (32) vertical, ledit corps mobile définissant une première surface interne tronconique (60) disposée selon l'axe vertical et évasée vers le haut, l'installation étant **caractérisée par**
- un corps fixe (66) par rapport à la cuve, ledit corps fixe définissant une deuxième surface interne tronconique (68) disposée selon l'axe vertical et évasée vers le haut, ladite deuxième surface interne tronconique étant située sensiblement dans un prolongement, et au-dessus, de la première surface interne tronconique.

2. Installation selon la revendication 1, dans laquelle une hauteur (73) de la deuxième surface interne tronconique (68) est sensiblement comprise entre 1 et 3 fois une hauteur (74) de la première surface interne tronconique (60), plus préférentiellement comprise entre 1,5 et 2 fois ladite hauteur (74) de la première surface interne tronconique, les hauteurs étant mesurées selon l'axe vertical.

3. Installation selon l'une des revendications 1 ou 2, dans laquelle la première surface interne tronconique (60) du corps mobile (56, 156) porte des ailettes (76, 176) s'étendant radialement vers l'axe vertical.

4. Installation selon la revendication 3, dans laquelle des surfaces des ailettes (176) sont inclinées par rapport à l'axe vertical, d'un angle (β) préférentiellement compris entre 5° et 40° et plus préférentiellement proche de 15°.

5. Installation selon l'une des revendications 3 ou 4, dans laquelle chaque ailette (176) a la forme d'une bande enroulée selon une hélice conique.

6. Installation selon l'une des revendications 3 à 5, dans laquelle une intersection de chaque ailette (176) avec un plan horizontal passe sensiblement par un rayon d'un cercle formant l'intersection dudit plan avec la première surface interne tronconique (60).

7. Installation selon l'une des revendications précédentes, dans laquelle une extrémité supérieure (70) de la deuxième surface interne tronconique (68) de la pompe élévatrice (54, 154) est configurée de sorte à déverser vers le décanteur (14) un liquide montant sur les première (60) et deuxième (68) surfaces internes tronconiques.

8. Installation selon l'une des revendications précédentes, comprenant plusieurs ensembles (50) installés en série, chaque ensemble étant formé d'un mélangeur (52) associé à un décanteur (14).

9. Procédé de mélange-séparation de deux liquides non miscibles présentant des densités différentes, le procédé comprenant les étapes suivantes :
- dans une installation (50) selon l'une des revendications précédentes, introduction dans la cuve (16) de deux liquides (22, 24) non miscibles ;
- mise en rotation de l'arbre (30) portant l'agitateur (28) de sorte à mélanger les deux liquides ;
- mise en rotation de la première surface interne tronconique (60) de la pompe (54, 154) élévatrice ;
- montée du mélange de liquides sur les première (60) et deuxième (68) surfaces internes tronconiques ; et
- écoulement du mélange vers le décanteur.

## Patentansprüche

1. Anlage (50) zum Mischen/Trennen von zwei nicht mischbaren Flüssigkeiten (22, 24), die unterschiedliche Dichten aufweisen, wobei die Anlage einen Mischer (52), der einem Abscheider (14) zugeordnet ist, aufweist, wobei der Mischer Folgendes umfasst:
- einen Tank (16), der mit zwei Eingängen (18, 20) für Flüssigkeit versehen ist;
- einen Rührer (28), der sich in dem Tank befindet, wobei der Rührer an einer um eine vertikale Achse (32) drehbaren Welle (30) montiert ist; und
- eine Hebepumpe (54, 154), die sich über dem Rührer befindet;
**dadurch gekennzeichnet, dass** die Pumpe Folgendes umfasst:
- einen um eine vertikale Achse (32) rotatorisch beweglichen Körper (56, 156), wobei der bewegliche Körper eine erste kegelstumpfförmige innere Oberfläche (60) definiert, die längs der vertikalen Achse angeordnet und nach oben erweitert ist, wobei die Anlage **gekennzeichnet ist durch**
- einen Körper (66), der in Bezug auf den Tank fest ist, wobei der feste Körper eine zweite kegelstumpfförmige innere Oberfläche (68) definiert, die längs der vertikalen Achse angeordnet ist und nach oben erweitert ist, wobei sich die zweite kegelstumpfförmige innere Oberfläche im Wesentlichen in einer Verlängerung und über der ersten kegelstumpfförmigen inneren Oberfläche befindet.

2. Anlage nach Anspruch 1, wobei die Höhe (73) der zweiten kegelstumpfförmigen inneren Oberfläche (68) im Wesentlichen im Bereich der 1- bis 3-fachen Höhe (74) der ersten kegelstumpfförmigen inneren Oberfläche (60) liegt und stärker bevorzugt im Bereich der 1,5- bis 2-fachen Höhe (74) der ersten kegelstumpfförmigen inneren Oberfläche liegt, wobei die Höhen längs der vertikalen Achse gemessen werden.

3. Anlage nach einem der Ansprüche 1 oder 2, wobei die erste kegelstumpf - förmige innere Oberfläche (60) des beweglichen Körpers (56, 156) Rippen (76, 176) trägt, die sich radial zu der vertikalen Achse erstrecken.

4. Anlage nach Anspruch 3, wobei die Oberflächen der Rippen (176) in Bezug auf die vertikale Achse um einen Winkel (β) geneigt sind, der vorzugsweise im Bereich von 5° bis 40° und stärker bevorzugt in der Nähe von 15° liegt.

5. Anlage nach einem der Ansprüche 3 oder 4, wobei jede Rippe (176) die Form eines Bandes hat, das längs einer konischen Schraubenlinie gewickelt ist.

6. Anlage nach einem der Ansprüche 3 bis 5, wobei ein Schnitt jeder Rippe (176) mit einer horizontalen Ebene im Wesentlichen durch einen Radius eines Kreises verläuft, der den Schnitt der Ebene mit der ersten kegelstumpfförmigen inneren Oberfläche (60) bildet.

7. Anlage nach einem der vorhergehenden Ansprüche, wobei ein oberes Ende (70) der zweiten kegelstumpfförmigen inneren Oberfläche (68) der Hebepumpe (54, 154) in der Weise konfiguriert ist, dass es zu dem Abscheider (14) eine Flüssigkeit entleert, die auf der ersten (60) und der zweiten (68) kegelstumpfförmigen inneren Oberfläche aufsteigt.

8. Anlage nach einem der vorhergehenden Ansprüche, die mehrere in Reihe installierte Anordnungen (50) umfasst, wobei jede Anordnung aus einem Mischer (52), der einem Abscheider (14) zugeordnet ist, gebildet ist.

9. Verfahren zum Mischen/Trennen von zwei nicht mischbaren Flüssigkeiten, die unterschiedliche Dichten aufweisen, wobei das Verfahren die folgenden Schritte umfasst:
- in einer Anlage (50) nach einem der vorhergehenden Ansprüche Einleiten der zwei nicht mischbaren Flüssigkeiten (22, 24) in den Tank (16);
- Versetzen der den Rührer (28) tragenden Welle (30) in Drehung, derart, dass die beiden Flüssigkeiten gemischt werden;
- Versetzen der ersten kegelstumpfförmigen inneren Oberfläche (60) der Hebepumpe (54, 154) in Drehung;
- Bewirken des Ansteigens der Flüssigkeiten auf der ersten (60) und der zweiten (68) kegelstumpfförmigen inneren Oberfläche; und
- Ausgießen des Gemisches in den Abscheider.

## Claims

1. A facility (50) for mixing/separating two immiscible liquids (22, 24) having different densities, said facility comprising a mixer (52) combined with a settler (14), said mixer including:
- a tank (16) provided with two liquid inlets (18, 20);
- an agitator (28) located in the tank, the agitator being mounted on a shaft (30) rotating around a vertical axis (32); and
- a lift pump (54, 154) located above the agitator;
**characterized in that** the pump includes:
- a moving body (56, 156) rotatable along the vertical axis (32), said moving body defining a first frustoconical inner surface (60) positioned along the vertical axis and upwardly flared, the facility being **characterized by**
- a body (66) that is stationary relative to the tank, said stationary body defining a second frustoconical inner surface (68) positioned along the vertical axis and upwardly flared, said second frustoconical inner surface being situated substantially in an extension of, and above, said first frustoconical inner surface.

2. The facility according to claim 1, wherein a height (73) of the second frustoconical inner surface (68) is substantially comprised between 1 and 3 times a height (74) of the first frustoconical inner surface (60), more preferably comprised between 1.5 and 2 times said height (74) of the first frustoconical inner surface, the heights being measured along the vertical axis.

3. The facility according to one of claims 1 or 2, wherein the first frustoconical inner surface (60) of the moving body (56, 156) bears fins (76, 176) extending radially toward the vertical axis.

4. The facility according to claim 3, wherein surfaces of the fins (176) are inclined relative to the vertical axis, by an angle (β) preferably comprised between 5° and 40°, and more preferably close to 15°.

5. The facility according to one of claims 3 or 4, wherein each fin (176) is in the form of a strip wound in a conical spiral.

6. The facility according to one of claims 3 to 5, wherein an intersection of each fin (176) with a horizontal plane passes substantially through a radius of a circle forming the intersection of said plane with the first frustoconical inner surface (60).

7. The facility according to one of the preceding claims, wherein an upper end (70) of the second frustoconical inner surface (68) of the lift pump (54, 154) is configured so as to pour, toward the settler (14), a liquid rising on the first (60) and second (68) frustoconical inner surfaces.

8. The facility according to one of the preceding claims, comprising several assemblies (50) installed in series, each assembly being formed by a mixer (52) associated with a settler (14).

9. A method for mixing/separating two immiscible liquids having different densities, the method comprising the following steps:
- in a facility (50) according to one of the preceding claims, introducing two immiscible liquids (22, 24) into the tank (16);
- rotating the shaft (30) bearing the agitator (28) so as to mix the two liquids;
- rotating the first frustoconical inner surface (60) of the lift pump (54, 154);
- causing the mixture of liquids to rise on the first (60) and second (68) frustoconical inner surfaces; and
- causing the mixture to flow toward the settler.
